(19) Europäisches Patentamt
European Patent Office
Office européen des brevets

(11) **EP 4 411 015 A1**

(12) **EUROPEAN PATENT APPLICATION**
published in accordance with Art. 153(4) EPC

(43) Date of publication:
**07.08.2024 Bulletin 2024/32**

(21) Application number: **22876837.0**

(22) Date of filing: **28.09.2022**

(51) International Patent Classification (IPC):
*C23C 2/06* (2006.01)    *C23C 2/20* (2006.01)
*C23C 2/26* (2006.01)    *C23C 18/04* (2006.01)

(52) Cooperative Patent Classification (CPC):
**C23C 2/06; C23C 2/20; C23C 2/26; C23C 18/04**

(86) International application number:
**PCT/KR2022/014541**

(87) International publication number:
**WO 2023/055065 (06.04.2023 Gazette 2023/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.09.2021 KR 20210130131**

(71) Applicant: POSCO Co., Ltd
**Pohang-si, Gyeongsangbuk-do 37859 (KR)**

(72) Inventors:
• KIM, Tae-Chul
**Gwangyang-si, Jeollanam-do 57807 (KR)**

• KIM, Sung-Joo
**Pohang-si, Gyeongsangbuk-do 37877 (KR)**
• KIM, Myung-Soo
**Pohang-si, Gyeongsangbuk-do 37877 (KR)**
• YOO, Bong-Hwan
**Gwangyang-si, Jeollanam-do 57807 (KR)**
• CHO, Yong-Kyun
**Gwangyang-si, Jeollanam-do 57807 (KR)**
• SOHN, Il-Ryoung
**Gwangyang-si, Jeollanam-do 57807 (KR)**

(74) Representative: Meissner Bolte Partnerschaft mbB
**Patentanwälte Rechtsanwälte**
**Postfach 86 06 24**
**81633 München (DE)**

(54) **PLATED STEEL SHEET HAVING EXCELLENT CORROSION RESISTANCE AND SURFACE APPEARANCE AND METHOD FOR MANUFACTURING SAME**

(57) The present invention provides a Zn-Mg-Al plated steel sheet having excellent corrosion resistance and surface appearance and a method for manufacturing same.

[FIG. 1]

EP 4 411 015 A1

**Description**

Technical Field

The present disclosure relates to a high-corrosion resistance plated steel sheet having excellent corrosion resistance and surface appearance and a method for manufacturing the same.

Background Art

When a galvanized steel sheet is exposed to a corrosive environment, a galvanized steel sheet may have sacrificial properties in which zinc, having a lower redox potential than that of iron, is corroded first, such that corrosion of a steel material may be prevented. Also, as zinc in a plating layer oxidizes, dense corrosion products may be formed on the surface of a steel material, thereby blocking the steel material from the oxidizing atmosphere and improving corrosion resistance of the steel material. Due to the advantageous properties, the application of a galvanized steel sheet has been increased to include steel sheets for construction materials, home appliances, and automobiles.
However, the corrosion environment has gradually deteriorated due to an increase in air pollution due to industrial advancement, and due to strict regulations on resource and energy conservation, the need for the development of a steel material having improved corrosion resistance than a conventional galvanized steel material has been increased.
To address this issue, various studies have been conducted on the technique of manufacturing a galvanized alloy plated steel sheet, which may improve corrosion resistance of a steel material by adding elements such as aluminum (Al) and magnesium (Mg) to a galvanizing bath. As a representative example, a Zn-Mg-Al galvanized alloy steel sheet in which Mg is further added to a Zn-Al plating composition system has been used.
However, a Zn-Mg-Al based galvanized alloy plated steel sheet may be often processed, but a plating layer surface may be uneven and roughness may be high, such that image clarity may be poor after painting.
Also, spangle may be easily formed on a Zn-Mg-Al based zinc alloy plated steel sheet during slow cooling, such that surface appearance may be unattractive.
Accordingly, a level of technology which may satisfy the demand for high-end material having excellent corrosion resistance and also excellent image clarity after painting and surface appearance has not been developed.

(Cited document 1) Korean Laid-Open Patent Publication No. 2010-0073819

Detailed description of present disclosure

Technical problems to solve

An aspect of the present disclosure is to provide a plated steel sheet having excellent corrosion resistance and surface appearance and a method for manufacturing the same.
Also, another aspect of the present disclosure is to provide a plated steel sheet having excellent corrosion resistance, image clarity after painting and surface appearance and a method for manufacturing the same.
The purpose of present disclosure is not limited to the above aspects. Anyone having ordinary knowledge in the technical field to which the present disclosure belongs may have no difficulty in understanding the additional purpose of the invention from the overall description of the present disclosure.

Solution to Problem

An aspect of the present disclosure provides a plated steel sheet comprising

a base steel sheet; and
a Zn-Mg-Al-based plating layer provided on at least one side of the base steel sheet,
wherein the plating layer comprises, by weight%, Mg: 4.0 to 6.3%, Al: 11.0 to 19.5%, a balance of Zn and inevitable impurities, and
satisfies relational expression 1 as below:

$$[\text{Relational expression 1}]$$

$$0.1 \leq I_{(110)}/I_{(103)} \leq 0.25$$

(In the Relational expression 1, $I_{(110)}$ is X-ray diffraction integrated intensity of a (110) plane crystal peak of a $MgZn_2$ phase, and $I_{(103)}$ is X-ray diffraction integrated intensity of a (103) plane crystal peak of a $MgZn_2$ phase.)

Another aspect of the present disclosure provides a method for manufacturing a plated steel sheet comprising

hot-dip galvanizing a base steel sheet by immersing the base steel sheet in a plating bath comprising, by weight%, Mg: 4.0 to 6.3%, Al: 11.0 to 19.5%, and a balance of Zn and inevitable impurities at an immersing temperature of $T_B$-10°C to $T_B$-40°C based on a plating bath temperature ($T_B$);

performing air-wiping by supplying inert gas cooled to 1 to 20°C to the hot-dip galvanized steel sheet;

primary cooling the air-wiped steel sheet to 420°C at an average cooling rate of 10 to 15°C/s; and

secondary cooling the primarily cooled steel sheet at an average cooling rate of 5 to 8°C/s in a temperature range of less than 420°C and 300°C or more,

wherein relational expression 2 is satisfied:

$$[\text{Relational expression 2}]$$

$$W_{air} \times (1-T/T_o) + 5 \leq P_{air}$$

(In the Relational expression 2, $W_{air}$ is a spacing between air-knives, and a unit is mm. $P_{air}$ is pressure of the air-knife, and a unit thereof is kPa. T is a temperature of the supplied inert gas, and a unit thereof is °C. $T_o$ is an average temperature of atmosphere and is determined as 25°C.)

Advantageous Effects of Invention

According to an aspect of the present disclosure, a plated steel sheet having excellent corrosion resistance and surface appearance and a method for manufacturing the same may be provided.

Also, according to another aspect of the present disclosure, a plated steel sheet having excellent corrosion resistance, surface appearance and image clarity after painting and a method for manufacturing the same may be provided.

The various and beneficial advantages and effects of the present disclosure are not limited to the above, and will be more easily understood in the course of describing specific embodiments of the present disclosure.

Brief Description of Drawings

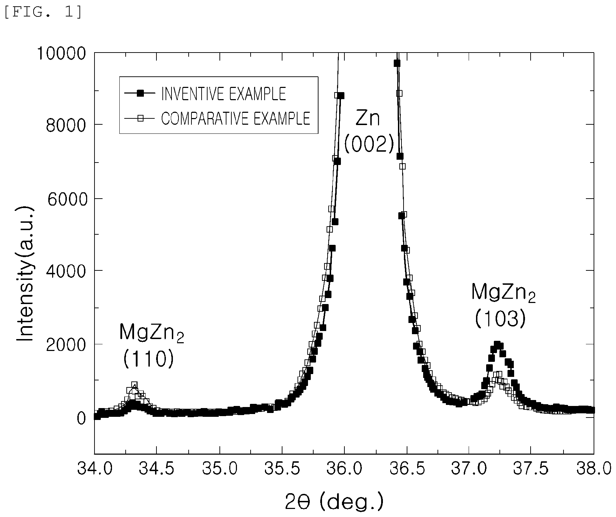

FIG. 1 is a diagram illustrating an X-ray diffraction peak according to an X-ray diffraction angle (2θ) measured by X-ray diffraction (hereinafter referred to as 'XRD') on a surface of a plating layer with respect to a plated steel sheet obtained from inventive example 8 and comparative example 8.

Best Mode for Invention

The terms used in this specification are intended to describe specific embodiments and are not intended to limit the present disclosure. Also, an expression used in the singular encompasses the expression of the plural, unless it has a clearly different meaning in the context.

The term "comprise" used in the specification specifies components and does not exclude the presence or addition of other components.

Unless otherwise defined, the entirety of terms, including technical and scientific terms, used in this specification may refer to the same as those generally understood by those skilled in the art in the technical field to which the present disclosure belongs. Terms defined in the dictionary are interpreted to have meanings consistent with related technical document and current disclosure.

Hereinafter, [plated steel sheet] according to an aspect of the present disclosure will be described in detail. When indicating the content of each element in the present disclosure, unless specifically defined otherwise, the content may be indicated in weight%.

In a conventional Zn-Mg-Al-based galvanized alloy steel sheet related technology, Mg may be added to improve corrosion resistance. However, when excessive Mg is added, floating dross may increase in a plating bath, such that the dross may need to be removed frequently, which may be problematic, and an upper limit of Mg content may be limited to 3%.

Accordingly, research has been conducted to further improve corrosion resistance by increasing a Mg content from 3%, but as more Mg and Al are added, due to unevenness between phases, roughness may be high and image clarity after painting may not be assured.

In addition to the image clarity after painting problem, crystal growth of Zn-Mg-Al based galvanized alloy plated steel sheet may be accelerated during slow cooling during a manufacturing process, and surface appearance may not be attractive due to spangle, such that there may be a limitation in application to home appliances and automobiles.

Accordingly, in the prior art, it has been technically difficult to provide a plated steel sheet having assured corrosion resistance and also having excellent image clarity after painting and surface appearance.

Accordingly, the present inventors conducted intensive studies to solve the above-mentioned problems and to provide a plated steel sheet having excellent corrosion resistance and also excellent image clarity after painting and/or surface appearance, and founded that, in addition to a composition of the plating layer, a ratio between an X-ray diffraction integrated intensity of a (110) plane crystal peak of a $MgZn_2$ phase obtained through XRD analysis on the surface of the plating layer and X-ray diffraction integrated intensity of (103) plane crystal of a $MgZn_2$ phase may be an important factor, and completed the present disclosure.

Hereinafter, the configuration of a plated steel sheet having excellent corrosion resistance and also excellent image clarity after painting and/or surface appearance will be described in detail.

First, the plated steel sheet according to the present disclosure may comprise a base steel sheet; and a Zn-Mg-Al-based plating layer provided on at least one surface of the base steel sheet.

In the present disclosure, the type of base steel sheet may not be particularly limited. For example, the base steel sheet may be implemented as an Fe-based base steel sheet used as a base steel sheet of general galvanized steel sheet, that is, a hot-rolled steel sheet or a cold-rolled steel sheet, but an embodiment thereof is not limited thereto. Alternatively, the base steel sheet may be, for example, carbon steel, ultra-low carbon steel, or high manganese steel used as a material for construction, home appliances, and automobiles.

However, as an example, the base steel sheet may have a composition of, in weight%, C: more than 0% (more preferably, 0.001% or more) and 0.18% or less, Si: more than 0% (more preferably, 0.001% or more) and 1.5% or less, Mn: 0.01 to 2.7%, P: more than 0% (more preferably, 0.001% or more) and 0.07% or less, S: more than 0% (more preferably, 0.001% or more) and 0.015% or less, Al: more than 0% (more preferably, 0.001% or more) and 0.5% or less, Nb: more than 0% (more preferably, 0.001% or more) and 0.06% or less, Cr: more than 0% (more preferably, 0.001% or more) and 1.1% or less, Ti: more than 0% (more preferably, 0.001% or more) and 0.06% or less, B: more than 0% (more preferably, 0.001% or more) and 0.03% or less and a balance of Fe and inevitable impurities.

Although not particularly limited, according to an embodiment of the present disclosure, at least one surface of the base steel sheet may be provided with a Zn-Mg-Al-based plating layer consisted of a Zn-Mg-Al-based alloy. The plating layer may be formed on only one surface of the base steel sheet, or may be formed on both surfaces of the base steel sheet. In this case, the Zn-Mg-Al-based plating layer may refer to a plating layer comprising Mg and Al and mainly comprising Zn (comprising more than 50% of Zn).

Although not particularly limited, according to an embodiment of the present disclosure, a thickness of the Zn-Mg-Al-based plating layer may be 5 to 100 $\mu$m, more preferably 7 to 90 um. When the thickness of the plating layer is less than 5 $\mu$m, the thickness of the plating layer may excessively decrease locally due to errors resulting from the thickness deviation of the plating layer, such that corrosion resistance may deteriorate. When the thickness of the plating layer exceeds 100 $\mu$m, cooling of the hot-dip plating layer may be delayed, a solidification defect such as a flow pattern, for example, may occur on the surface of the plating layer, and productivity of the steel sheet may decrease to solidify the plating layer.

Meanwhile, according to an embodiment of the present disclosure, although not particularly limited, an Fe-Al-based inhibition layer may be further comprised between the base steel sheet and the Zn-Mg-Al-based plating layer. The Fe-Al-based inhibition layer may mainly comprise an intermetallic compound of Fe and Al (e.g., more than 60%), and examples of the intermetallic compound of Fe and Al may comprise FeAl, $FeAl_3$, and $Fe_2Al_5$. Also, some components derived from the plating layer, such as Zn and Mg, may be further comprised, for example, up to 40%. The inhibition layer may be formed due to alloying by Fe and plating bath components diffused from the base steel sheet at an initial stage of plating. The inhibition layer may improve adhesion between the base steel sheet and the plating layer, and may also prevent Fe diffusion from the base steel sheet to the plating layer. The inhibition layer may be formed continuously between the base steel sheet and the Zn-Mg-Al-based plating layer, or may be formed discontinuously. In this case, other than the above-mentioned description, regarding the inhibition layer, a commonly known description in the relevant technical field may be applied.

Although not particularly limited, according to an embodiment of the present disclosure, a thickness of the inhibition layer may be 0.1 to 1 um. The inhibition layer may assure corrosion resistance by preventing alloying, but as the layer is brittle, the layer may affect processability, and accordingly, a thickness thereof may be determined to be 1 $\mu$m or less. However, to function as a inhibition layer, the thickness may be 0.1 um or more. In terms of further improving the above-mentioned effect, preferably, an upper limit of the thickness of the inhibition layer may be 1.00 um, or a lower limit of the inhibition layer thickness may be 0.15 $\mu$m.

In this case, the thickness of the inhibition layer may refer to a minimum thickness in the thickness direction with respect to the inhibition layer, obtained by manufacturing a cross-sectional sample cut from a plated steel sheet in the thickness direction (i.e., the direction perpendicular to the rolling direction) and imaging the cross-section using a scanning electron microscope (hereinafter referred to as 'SEM').

Also, according to the present disclosure, the plating layer may comprise, by weight%, Mg: 4.0 to 6.3%, Al: 11.0 to 19.5%, and a balance of Zn and inevitable impurities. In the description below, the reason for adding each component and the reason for content limitation will be described in detail.

Mg: 4.0% or more and 6.3% or less

Mg may improve corrosion resistance of a plated steel material. In the present disclosure, a Mg content in the plating layer may be controlled to 4.0% or more to assure desired excellent corrosion resistance. When Mg is added excessively, dross may occur. Accordingly, the Mg content may be controlled to 6.3% or less.

Al: 11.0% or more and 19.5% or less

Generally, when Mg is added in an amount of 1% or more, the effect of improving corrosion resistance may be exhibited, but when Mg is added in an amount of 2% or more, floating dross may increase in a plating bath due to oxidation of Mg in the plating bath, such that dross may need to be frequently removed.

Due to this problem, in the prior art, by adding 1.0% or more of Mg in Zn-Mg-Al-based zinc alloy plating, corrosion resistance may be assured, and an upper limit of Mg content may be determined to be 3.0% for commercialization.

However, to further improve corrosion resistance, it may be necessary to increase the Mg content to 4% or more. However, when the plating layer comprises 4% or more of Mg, dross may occur due to oxidation of Mg in the plating bath, which may be problematic, such that it may be necessary to add 11.0% or more of Al.

When Al is added excessively to suppress dross, however, a melting point of the plating bath may increase and an operating temperature may thus increase excessively, such that problems caused by high-temperature work, such as erosion of the plating bath structure and deterioration of the steel material, may occur. Also, the Al content in the plating bath is excessive, Al may react with Fe of the base steel sheet and may not contribute to formation of the Fe-Al inhibition layer, and reaction between Al and Zn may occur rapidly, such that a lump-shaped outburst phase may be excessively formed, which may rather deteriorate corrosion resistance. Accordingly, it may be preferable to control an upper limit of Al content in the plating layer to 19.5%.

Balance of Zn and inevitable impurities

In addition to the composition of the plating layer described above, a balance of Zn and other inevitable impurities may be further comprised. Inevitable impurities may comprise components unintentionally mixed in a process of manufacturing general hot-dip galvanized steel sheet, and a person skilled in the relevant technical field may easily understand the addition.

Meanwhile, according to the present disclosure, the plated steel sheet may satisfy relational expression 1 as below in order to secure corrosion resistance and excellent image clarity after painting and beautified surface appearance properties at the desired level.

$$[\text{Relational expression 1}]$$

$$0.1 \leq I_{(110)}/I_{(103)} \leq 0.25$$

(In the Relational expression 1, $I_{(110)}$ is X-ray diffraction integrated intensity of a (110) plane crystal peak of a $MgZn_2$ phase, and $I_{(103)}$ is X-ray diffraction integrated intensity of a (103) plane crystal peak of a $MgZn_2$ phase.)

The present inventors found that a presence ratio of (110) plane crystal of the $MgZn_2$ phase and a (103) plane crystal of the $MgZn_2$ phase present in the plating layer may be an important factor in assuring image clarity after painting and beautified surface appearance properties of the plating layer. That is, by controlling a ratio between X-ray diffraction integrated intensity of the (110) plane crystal peak of a $MgZn_2$ phase obtained by analyzing by XRD on the surface of the plating layer and X-ray diffraction integrated intensity of (103) plane crystal peak of $MgZn_2$ phase to satisfy relational expression 1, excellent corrosion resistance may be assured and image clarity after painting and surface appearance may also improve.

Specifically, in the present disclosure, when the amount of (103) plane crystals are large in the $MgZn_2$ phase, it may indicate that a great deal of crystals are formed in the vertical direction, which prevents the crystals from growing in the lateral direction, thereby preventing the formation of spangle.

However, in the component system according to the present disclosure, the (110) plane crystal of the $MgZn_2$ phase and the (103) plane crystal of the $MgZn_2$ phase, which affect the properties of the present disclosure, may be essentially present, such that by harmonizing the two types of crystal planes, image clarity after painting and surface appearance properties may be determined.

Accordingly, when the $I_{(110)}/I_{(103)}$ value defined from relational expression 1 is less than 0.1, a great deal of crystal mismatch may occur, such that adhesion of the plating layer may be reduced, which may be problematic. When the $I_{(110)}/I_{(103)}$ value defined from relational expression 1 above exceeds 0.25, the presence ratio between the (110) plane crystal of the $MgZn_2$ phase and the (103) plane crystal of the $MgZn_2$ phase may be excessive, such that image clarity after painting or surface appearance properties may become inadequate. During rapid cooling, the (110) plane of the $MgZn_2$ phase may be present below the plating layer, may promote the formation of (002) plane crystal of the Zn phase upwardly of the plating layer, and may be in contact with the (103) plane of the $MgZn_2$ phase such that surface may be beautified.

In other words, the (110) plane crystal of the $MgZn_2$ phase and the (103) plane crystal of the $MgZn_2$ phase may be present in a mixed manner to satisfy the above relational expression 1, and as a great deal of the (103) plane crystal of the $MgZn_2$ phase, which has a smaller interplanar spacing than the (002) plane crystal of the Zn phase, is present in as compared to the (110) plane crystal of the $MgZn_2$ phase, by adding Mg, corrosion resistance as compared to conventional technology may improve, and a plated steel sheet having low surface roughness and beautified surface appearance may be assured.

Meanwhile, although not particularly limited, according to an embodiment of the present disclosure, in terms of maximizing the above-described effect, more preferably, a lower limit of the $I_{(110)}/I_{(103)}$ value defined from relational expression 1 may be 0.11, or an upper limit of the $I_{(110)}/I_{(103)}$ value may be 0.15.

In this case, as for the (110) plane crystal peak of the above-described $MgZn_2$ phase and the (103) plane crystal peak of the $MgZn_2$ phase, the (110) plane crystal peak and (103) plane crystal peak may be distinguished using methods known in the art from the X-ray diffraction integrated intensity obtained by analyzing the surface of the plating layer with XRD, which may thus not be separately defined in this specification.

Meanwhile, the method of measuring the X-ray diffraction integrated intensity may not be particularly limited, and a method known in the art may be applied. For example, the surface of the plating layer may be analyzed by XRD to measure the X-ray diffraction integrated intensity, and a RINT2000 diffractometer may be used as a device to measure the X-ray diffraction integrated intensity, and X-ray diffraction integrated intensity measurement conditions may comprise Cu target, voltage: 40kV, current: 200mA, and the X-ray diffraction angle ($2\theta$) may be from 10 to 100 °. As a representative example, when a Cu target is used, $I_{(110)}$ may be defined as the integrated intensity of the peak between $2\theta = 34.0°$ to $34.6°$, and $I_{(103)}$ may be defined as integrated intensity of the peak between $2\theta = 37.0°$ to $37.5°$. However, when the target material is changed to Mo, or the like, the value of $2\theta$ may change depending on the type of target material, such that the range of $2\theta$ is not particularly limited in the present disclosure.

Also, in this specification, the $MgZn_2$ crystal having the (110) plane may refer to a structure in which the (110) plane appears among hexagonal crystals of the $MgZn_2$ phase on the surface of a steel sheet. Also, the $MgZn_2$ crystal having the (103) plane may refer to a structure in which the (103) plane appears among hexagonal crystals of the $MgZn_2$ phase on the surface of a steel sheet.

Meanwhile, although not particularly limited, according to an embodiment of the present disclosure, the plated steel sheet may optionally satisfy the value of I (110) of 85 or less. As the value of $I_{(110)}$ satisfies 85 or less, the presence ratio of the (103) plane crystal of the $MgZn_2$ phase may be increased as compared to the (110) plane crystal of the MgZn2 phase, within the range satisfying relational expression 1. Accordingly, by suppressing spangle in the plating layer, the influence of the (103) plane crystal of the $MgZn_2$ phase, which contributes to assurance of beautified surface appearance properties, may be further increased.

Accordingly, more preferably, in terms of maximizing the above-mentioned effect, an upper limit of the value of I (110) may be 80, or a lower limit of the value of I (110) may be 50.

Alternatively, although not particularly limited, according to an embodiment of the present disclosure, the plated steel sheet may optionally have a value of I (103) of 525 or more. As the value of $I_{(103)}$ satisfies 525 or more, the presence ratio of the (103) plane crystal of the $MgZn_2$ phase may be increased as compared to the (110) plane crystal of the MgZn2 phase, within the range satisfying relational expression 1. Accordingly, by suppressing spangle in the plating layer, the influence of the (103) plane crystal of the $MgZn_2$ phase, which contributes to assurance of beautified surface appearance properties, may be further increased.

Accordingly, more preferably, in terms of maximizing the above-mentioned effect, a lower limit of the value of I (103) may be 530, or an upper limit of the value of I (103) may be 600.

In this case, although not particularly limited, the value of I (110) and the value of I (103) may be measured using a RINT2000 diffractometer under the conditions of a Cu target, voltage: 40kV and current: 200mA.

Meanwhile, although not particularly limited, according to an embodiment of the present disclosure, optionally, surface roughness of the plated steel sheet may satisfy the range of Ra: 0.3 to 0.6 um and Rpc: 40 to 90 (/10 mm). By adjusting surface roughness of the plated steel sheet to satisfy the above-mentioned range, the effect of suppressing spangle may be further improved and more beautified surface appearance properties may be assured.

In the description below, the [method of manufacturing plated steel sheet] according to another aspect of the present disclosure will be described in detail. However, the plated steel sheet in the present disclosure may need to be manufactured by the manufacturing method below.

According to an embodiment of the present disclosure, preparing a base steel sheet may be further comprised, and the type of the base steel sheet is not particularly limited. A Fe-based base steel sheet used as the base steel sheet of the general galvanized steel sheet may be a hot-rolled steel sheet or a cold-rolled steel sheet, but an embodiment thereof is not limited thereto. Also, the base steel sheet may be, for example, carbon steel, ultra-low carbon steel, or high manganese steel used as a material for construction, home appliances, and automobiles, but an embodiment thereof is not limited thereto. In this case, the above description may be applied to the base steel sheet.

Thereafter, hot-dip galvanizing may be performed by immersing the base steel sheet in a plating bath comprising, by weight%, Mg: 4.0 to 6.3%, Al: 11.0 to 19.5%, and a balance of Zn and inevitable impurities.

In this case, according to an embodiment of the present disclosure, as for the reason for adding components and limiting content in the plating bath described above, excluding the small amount of Fe content which may flow from the base steel sheet, the description of the components of the plating layer described above may be applied.

Meanwhile, to manufacture a plating bath of the above-described composition, a composite ingot comprising predetermined Zn, Al and Mg or a Zn-Mg or a Zn-Al ingot comprising individual components may be used. To replenish the plating bath consumed by hot-dip plating, the ingot may be further melted and supplied. In this case, the ingot may be dissolved by being directly immersed in a plating bath, or the ingot may be melted in a separate pot and the molten metal may be added to the plating bath.

According to the present disclosure, during the hot-dip galvanizing, an immersing temperature of the base steel sheet may be controlled to satisfy an immersing temperature of $T_B$-10°C to $T_B$-40°C based on a plating bath temperature ($T_B$). When an immersing temperature of the base steel sheet is less than $T_B$-10°C, a problem may occur in which a crystal phase is not dense, and when the immersing temperature of the base steel sheet exceeds $T_B$-40°C, a problem may occur in plating adhesion.

In this case, although not particularly limited, the aforementioned plating bath temperature ($T_B$) may range from 440 to 500°C. Meanwhile, more preferably, a lower limit of the plating bath temperature ($T_B$) may be 455°C, or an upper limit of the plating bath temperature ($T_B$) may be 490°C.

Thereafter, air-wiping may be performed by supplying an inert gas cooled to 1 to 20°C to the hot-dip galvanized steel sheet. The present inventors conducted extensive research and found that, differently from conventional methods, by performing air-wiping by supplying inert gas cooled to a specific temperature range, the effect of rapid cooling may be obtained without the problem of surface oxidation.

In other words, when the temperature of the inert gas supplied during air-wiping is less than 1°C, water droplets may form on peripheral devices, such that wiping may be uneven. When the temperature of the inert gas supplied during air-wiping exceeds 20°C, the effect of rapid cooling may be reduced and a beautified surface appearance may not be formed. In terms of maximizing the above-mentioned effect, more preferably, a lower limit of the temperature of nitrogen gas supplied during the air-wiping may be 1.0°C, or an upper limit of the temperature of nitrogen gas supplied during the air-wiping may be 5.0°C.

Although not particularly limited, according to an embodiment of the present disclosure, as the inert gas, argon (Ar) gas, nitrogen ($N_2$) gas, or a mixed gas of argon and nitrogen may be used, and nitrogen gas may be used more preferably.

Also, according to the present disclosure, the air-wiping may be controlled to satisfy relational expression 2. By controlling the conditions of air-wiping to satisfy relational expression 2 below, a formation ratio between the (110) plane crystal of the $MgZn_2$ phase and the (103) plane crystal of the $MgZn_2$ phase may be optimized. Also, the surface may have beautified roughness properties exhibiting milky appearance, such that surface appearance may be smooth. In this case, relational expression 2 below may be a value obtained empirically, and thus, the unit thereof may not be specifically determined, and it may be sufficient to satisfy the $W_{air}$ unit mm, $P_{air}$ unit kPa, and T and $T_o$ unit °C defined below.

[Relational expression 2]

$$W_{air} \times (1 - T/T_o) + 5 \leq P_{air}$$

(In the Relational expression 2, $W_{air}$ is a spacing between air-knives, and a unit is mm. $P_{air}$ is pressure of the air-knife, and a unit thereof is kPa. T is a temperature of the supplied inert gas, and a unit thereof is °C. $T_o$ is an average temperature of atmosphere and is determined as 25°C.)

Also, although not particularly limited, according to an embodiment of the present disclosure, in the above-described air-wiping, a spacing between air-knives may range from 10 to 30 mm (more preferably, 10 to 20 mm). Alternatively, pressure of the air-knife may be in the range of 5 to 30 kPa (more preferably, 15 to 23 kPa) . Alternatively, the temperature of the supplied gas may be in the range of 1 to 20°C (more preferably, 1 to 5°C). By adjusting the air-wiping conditions to satisfy the above-mentioned range, the plated steel sheet having excellent corrosion resistance, image clarity after painting and surface appearance may be effectively manufactured.

According to the present disclosure, after the air-wiping, primary cooling may be performed on the air-wiped steel sheet at an average cooling rate of 10 to 15°C/s to 420°C, and secondary cooling may be performed on the primary cooled steel sheet at an average cooling rate of 5 to 8°C/s in a temperature range of less than 420°C and 300°C or more. In this case, the average cooling rate may be based on the surface temperature of the steel sheet.

The present inventors conducted research and found that, by precisely controlling the cooling rate by dividing the cooling into two steps, and performing rapid cooling during primary cooling, the formation ratio between the (110) plane crystal of the $MgZn_2$ phase and the (103) plane crystal of the $MgZn_2$ phase may be more optimized, and surface appearance properties may further improve, and also that the effect of obtaining a uniform surface structure in the width direction of the steel sheet may be assured.

In other words, during the primary cooling, when the average cooling rate is less than 10.0°C/s, the effect of rapid cooling may be weak, which may be problematic, and when the rate exceeds 15.0°C/s during the primary cooling, the surface may be uneven in the width direction of the steel sheet. Also, during the secondary cooling, when the average cooling rate is less than 5.0°C/s, surface roughness may increase, which may be problematic, and when the average cooling rate exceeds 8.0°C/s during the secondary cooling, the surface of the steel sheet may be uneven in the width direction.

Meanwhile, although not particularly limited, according to an embodiment of the present disclosure, optionally, cooling conditions may be controlled to satisfy relational expressions 3 and 4 below during the cooling. By controlling the relationship between the average cooling rate during the primary cooling and the secondary cooling as in relational expressions 3 and 4 below, spangle may be further suppressed in the plated steel sheet and appearance properties may be further improved. In this case, since relational expressions 3 and 4 below are values obtained empirically, the units thereof may not be specifically determined, and it is sufficient to satisfy each unit of $C_1$ and $C_2$ defined below.

[Relational expression 3]

$$17 \leq C_1 + C_2$$

[Relational expression 4]

$$5 \leq C_1 - C_2 \leq 10$$

(In the Relational expression 3, $C_1$ is an average cooling rate [°C/s] during the primary cooling, and $C_2$ is an average cooling rate [°C/s] during the secondary cooling.)

Meanwhile, although not particularly limited, according to an embodiment of the present disclosure, optionally, surface roughness of the plated steel sheet obtained by the secondary cooling may be controlled to be in the range of Ra: 0.3 to 0.6 um and Rpc: 40 to 90(/10 mm). By controlling the surface roughness Ra and Rpc of the plated steel sheet to satisfy the above range, the surface may be beautified and excellent appearance may be assured.

As described above, by precisely controlling the plating composition and manufacturing conditions, a plated steel sheet having excellent corrosion resistance and also excellent bendability and surface appearance may be effectively provided.

Mode for Invention

(Embodiment)

Hereinafter, the present disclosure will be described in greater detail through embodiments. However, it may be important to note that the embodiments may be only intended to describe the present disclosure through examples and is not intended to limit the scope of rights of the present disclosure. This is because the scope of rights in present disclosure is determined by matters stated in the claims and matters reasonably inferred therefrom.

A base steel sheet having a composition of C: 0.018%, Si: 0.01%, Mn: 0.2%, P: 0.009%, S: 0.005%, Al: 0.1%,

**EP 4 411 015 A1**

Nb: 0.02%, Cr: 0.2%, Ti: 0.02%, B: 0.015%, and a balance of Fe and inevitable impurities and having a thickness of 1.5 mm and a width of 1200 mm may be prepared. The prepared base steel sheet was hot-dip galvanized by being immersed in a plating bath under the conditions as in Table 1 below.

Thereafter, an air-wiping treatment was performed on the hot-dip galvanized steel sheet using nitrogen ($N_2$) gas under the conditions as in Table 1 below, and primary cooling and secondary cooling were performed under the conditions as in Table 2 below. Thereafter, the steel sheet obtained by the secondary cooling was controlled to have surface roughness in Table 2 below.

[Table 1]

| No. | Plating conditions | | | | Air-wiping conditions | | |
|---|---|---|---|---|---|---|---|
| | Plating bath composition [wt%] (Balance of Zn and inevitable impurities) | | Plating bath temperature [°C] | Base steel sheet immersing temperature [°C] | Spacing between air knives [mm] | Air knife pressure [kPa] | Nitrogen temperature [°C] |
| | Mg | Al | | | | | |
| Inventive example 1 | 4.0 | 11.0 | 440 | 430 | 14 | 8 | 20 |
| Inventive example 2 | 4.4 | 11.4 | 450 | 440 | 20 | 12 | 17 |
| Inventive example 3 | 4.9 | 12.2 | 455 | 445 | 25 | 16 | 15 |
| Inventive example 4 | 5.4 | 14.4 | 460 | 450 | 18 | 14 | 13 |
| Inventive example 5 | 5.7 | 17.5 | 475 | 465 | 30 | 22 | 11 |
| Inventive example 6 | 6.1 | 19.2 | 490 | 470 | 15 | 16 | 7 |
| Inventive example 7 | 4.6 | 11.6 | 460 | 440 | 20 | 23 | 5 |
| Inventive example 8 | 5.1 | 12.3 | 455 | 425 | 10 | 15 | 3 |
| Inventive example 9 | 6.3 | 19.5 | 490 | 450 | 15 | 20 | 1 |
| Comparative example 1 | 3.8 | 9.1 | 440 | 440 | 30 | 13 | 17 |
| Comparative example 2 | 6.4 | 10.2 | 450 | 450 | 35 | 20 | 12 |
| Comparative example 3 | 5.7 | 7.9 | 470 | 470 | 40 | 21 | 10 |
| Comparative example 4 | 7.1 | 14.4 | 490 | 490 | 45 | 18 | 16 |
| Comparative example 5 | 3.7 | 8.9 | 440 | 450 | 40 | 23 | 9 |
| Comparative example 6 | 6.3 | 10.2 | 450 | 460 | 40 | 23 | 7 |

(continued)

| No. | Plating conditions | | | | Air-wiping conditions | | |
|---|---|---|---|---|---|---|---|
| | Plating bath composition [wt%] (Balance of Zn and inevitable impurities) | | Platin g bath temper ature [°C] | Base steel sheet immersi ng temperature [°C] | Spacing between air knives [mm] | Air knife pressure [kPa] | Nitrogen temperat ure [°C] |
| | Mg | Al | | | | | |
| Comparative example 7 | 5.6 | 7.9 | 470 | 460 | 50 | 25 | 5 |
| Comparative example 8 | 7.2 | 20.0 | 490 | 470 | 50 | 22 | 15 |
| Comparative example 9 | 7.6 | 19.1 | 490 | 480 | 25 | 10 | 19 |
| Comparative example 10 | 4.3 | 8.0 | 470 | 450 | 20 | 8 | 21 |
| Comparative example 11 | 4.8 | 6.5 | 460 | 430 | 18 | 7 | 21 |
| Comparative example 12 | 6.7 | 10.8 | 470 | 450 | 45 | 9 | 22 |
| Comparative example 13 | 7.8 | 21.0 | 510 | 510 | 45 | 8 | 23 |
| Comparative example 14 | 6.5 | 10.7 | 460 | 470 | 30 | 4 | 25 |
| Comparative example 15 | 6.9 | 7.8 | 490 | 490 | 25 | 3 | 25 |
| Comparative example 16 | 4.9 | 12.5 | 500 | 520 | 20 | 10 | 17 |
| Comparative example 17 | 6.2 | 19.4 | 510 | 500 | 25 | 15 | 16 |

[Table 2]

| No. | Primary cooling to 420°C | Secondary cooling in temperature range of less than 420°C and 300°C or more | Surface roughness | Number of surface peaks |
|---|---|---|---|---|
| | Average cooling rate [°C/s] | Average cooling rate [°C/s] | Ra [μm] | Rpc [/10 mm] |
| Inventive example 1 | 10.0 | 8.0 | 0.55 | 48 |
| Inventive example 2 | 10.5 | 7.5 | 0.50 | 56 |
| Inventive example 3 | 11.0 | 9.0 | 0.51 | 53 |
| Inventive example 4 | 10.5 | 7.0 | 0.59 | 42 |
| Inventive example 5 | 10.0 | 5.0 | 0.47 | 70 |
| Inventive example 6 | 11.0 | 5.5 | 0.44 | 79 |
| Inventive example 7 | 13.0 | 6.5 | 0.48 | 68 |
| Inventive example 8 | 14.0 | 7.0 | 0.36 | 85 |
| Inventive example 9 | 15.0 | 8.0 | 0.31 | 89 |
| Comparative example 1 | 8.0 | 7.0 | 1.24 | 21 |
| Comparative example 2 | 9.0 | 6.0 | 1.17 | 23 |
| Comparative example 3 | 10.0 | 9.0 | 1.06 | 31 |
| Comparative example 4 | 11.0 | 10.0 | 0.98 | 34 |
| Comparative example 5 | 7.0 | 12.0 | 1.25 | 20 |
| Comparative example 6 | 6.0 | 8.0 | 1.15 | 24 |
| Comparative example 7 | 5.5 | 15.0 | 0.87 | 28 |
| Comparative example 8 | 8.0 | 14.0 | 0.81 | 27 |
| Comparative example 9 | 10.0 | 13.0 | 0.69 | 36 |
| Comparative example 10 | 12.0 | 6.0 | 0.75 | 30 |
| Comparative example 11 | 13.0 | 5.0 | 0.70 | 32 |

(continued)

| No. | Primary cooling to 420°C | Secondary cooling in temperature range of less than 420°C and 300°C or more | Surface roughness | Number of surface peaks |
|---|---|---|---|---|
| | Average cooling rate [°C/s] | Average cooling rate [°C/s] | Ra [μm] | Rpc [/10 mm] |
| Comparat ive example 12 | 9.5 | 12.0 | 0.72 | 34 |
| Comparat ive example 13 | 5.0 | 10.0 | 1.40 | 22 |
| Comparat ive example 14 | 6.0 | 9.0 | 1.12 | 20 |
| Comparat ive example 15 | 3.0 | 7.5 | 1.54 | 18 |
| Comparat ive example 16 | 8.0 | 7.1 | 1.62 | 15 |
| Comparat ive example 17 | 7.0 | 4.0 | 1.89 | 11 |

A sample of the plated steel sheet obtained by the method in Tables 1 to 2 was prepared, the plating layer was dissolved in a hydrochloric acid solution, the dissolved liquid was analyzed by wet analysis (ICP) to measure the composition of the plating layer, and was listed in Table 3 (a balance of Zn and inevitable impurities are comprised).

Also, a cross-sectional sample cut in the direction perpendicular to the rolling direction of the steel sheet was manufactured such that an interfacial surface between the plating layer and the base steel sheet was able to observed, the sample was imaged using an SEM, and it was confirmed that a Fe-Al-based inhibition layer was formed between the base steel sheet and the Zn-Mg-Al-based plating layer. Using the SEM, the thickness of the Fe-Al-based inhibition layer was measured in the direction perpendicular to the rolling direction of the steel sheet and is listed in Table 3 below.

Also, to measure X-ray diffraction integrated intensity of the plating layer, a diffraction peaks $MgZn_2$ (110) and $MgZn_2$ (103) was measured at $2\theta = 34.0°$ to $38.0°$ under the conditions of a Cu target, voltage: 40kV, and current: 200mA using a RINT2000 diffractometer, and integrated intensity of the corresponding peak was calculated. Integrated intensity $I_{(110)}$ may be a value obtained by integrating the peak from $34°$ to $34.6°$, and integrated intensity $I_{(103)}$ may be a value obtained by integrating the peak from $37°$ to $37.5°$ (unit is integrated intensity, corresponding to cps*$2\theta$), and the values were listed in Table 3 below.

[Table 3]

| No. | Plating layer composition [wt%] | | Fe-Al-based inhibition layer | Calculated integrated intensity of X-ray diffraction peaks on plating layer surface | | |
|---|---|---|---|---|---|---|
| | Mg | Al | Average thickness [μm] | $I_{(110)}$ | $I_{(103)}$ | $I_{(110)}/I_{(103)}$ |
| Inventiv e example 1 | 4.0 | 11.0 | 0.14 | 125 | 500 | 0.25 |
| Inventiv e example 2 | 4.4 | 11.4 | 0.21 | 117 | 509 | 0.23 |
| Inventiv e example 3 | 4.9 | 12.2 | 0.36 | 107 | 510 | 0.21 |
| Inventiv e example 4 | 5.4 | 14.4 | 0.44 | 103 | 515 | 0.20 |
| Inventiv e example 5 | 5.7 | 17.5 | 0.66 | 98 | 516 | 0.19 |

(continued)

| No. | Plating layer composition [wt%] | | Fe-Al-based inhibition layer | Calculated integrated intensity of X-ray diffraction peaks on plating layer surface | | |
|---|---|---|---|---|---|---|
| | Mg | Al | Average thickness [μm] | $I_{(110)}$ | $I_{(103)}$ | $I_{(110)}/I_{(103)}$ |
| Inventive example 6 | 6.1 | 19.2 | 0.91 | 89 | 524 | 0.17 |
| Inventive example 7 | 4.6 | 11.6 | 0.24 | 80 | 533 | 0.15 |
| Inventive example 8 | 5.1 | 12.3 | 0.38 | 75 | 536 | 0.14 |
| Inventive example 9 | 6.3 | 19.5 | 0.99 | 60 | 545 | 0.11 |
| Comparative example 1 | 3.8 | 9.1 | 0.06 | 109 | 404 | 0.27 |
| Comparative example 2 | 6.4 | 10.2 | 0.08 | 114 | 380 | 0.30 |
| Comparative example 3 | 5.7 | 7.9 | 0.07 | 119 | 361 | 0.33 |
| Comparative example 4 | 7.1 | 14.4 | 0.42 | 134 | 372 | 0.36 |
| Comparative example 5 | 3.7 | 8.9 | 0.08 | 146 | 365 | 0.40 |
| Comparative example 6 | 6.3 | 10.2 | 0.07 | 143 | 34 | 0.42 |
| Comparative example 7 | 5.6 | 7.9 | 0.08 | 147 | 342 | 0.43 |
| Comparative example 8 | 7.2 | 20.0 | 1.22 | 138 | 300 | 0.46 |
| Comparative example 9 | 7.6 | 19.1 | 0.94 | 126 | 263 | 0.48 |
| Comparative example 10 | 4.3 | 8.0 | 0.05 | 149 | 292 | 0.51 |
| Comparative example 11 | 4.8 | 6.5 | 0.03 | 152 | 287 | 0.53 |
| Comparative example 12 | 6.7 | 10.8 | 0.17 | 163 | 263 | 0.62 |
| Comparative example 13 | 7.8 | 21.0 | 2.11 | 180 | 254 | 0.71 |
| Comparative example 14 | 6.5 | 10.7 | 0.09 | 139 | 257 | 0.54 |
| Comparative example 15 | 6.9 | 7.8 | 0.06 | 148 | 389 | 0.38 |
| Comparative example 16 | 4.9 | 12.6 | 0.05 | 150 | 234 | 0.64 |
| Comparative example 17 | 6.1 | 19.4 | 0.06 | 172 | 238 | 0.72 |

As for each inventive example and comparative example, properties were evaluated based on the criteria as below, and the evaluation results of each properties were listed in Table 4 below.

<Corrosion resistance>

In order to evaluate corrosion resistance, corrosion resistance was evaluated according to the criteria as below using a salt spray tester (SST) using a test method in accordance with ISO14993.

○: The time taken for red rust is 30 times or more and less than 40 times relative to that of Zn plating of the same thickness.
△: The time taken for red rust is 20 times or more and less than 30 times relative to that of Zn plating of the same thickness.
×: The time taken for red rust is less than 20 times relative to that of Zn plating of the same thickness.

<Image clarity after painting>

To evaluate image clarity after painting, the material was cut into 75 mm × 150 mm, the steel sheet is degreased and treated with phosphate, electrodeposition painting was performed and the Wsa (image clarity index) ($\mu$m) value was measured.

○: Wsa is 0.35 or less

△: Wsa is 0.36 or more and 0.40 or less

×: Wsa is 0.41 or more

<Presence or absence of spangle>

To evaluate the size of spangle, images were taken at 100x magnification using an optical microscope, the sizes of the spangle were measured in two dimensions, the longitudinal axis and the horizontal axis, were averaged for 10 samples, and were evaluated according to the criteria as below.

◎: Spangle not observed
○: Spangle size (0.1 to 0.29 mm)
△: Spangle size (0.3 to 0.5 mm)
×: spangle size (0.5 mm or more)

[Table 4]

| No. | Corrosion resistance | Image clarity after painting | Presence or absence of spangle |
|---|---|---|---|
| Inventive example 1 | ○ | ○ | ○ |
| Inventive example 2 | ○ | ○ | ○ |
| Inventive example 3 | ○ | ○ | ○ |
| Inventive example 4 | ○ | ○ | ○ |
| Inventive example 5 | ○ | ○ | ○ |
| Inventive example 6 | ○ | ○ | ○ |
| Inventive example 7 | ○ | ○ | ◎ |
| Inventive example 8 | ○ | ○ | ◎ |
| Inventive example 9 | ○ | ○ | ◎ |
| Comparati ve example 1 | × | △ | △ |
| Comparati ve example 2 | ○ | △ | △ |
| Comparati ve example 3 | × | ○ | △ |

(continued)

| No. | Corrosion resistance | Image clarity after painting | Presence or absence of spangle |
|---|---|---|---|
| Comparati ve example 4 | ○ | × | Δ |
| Comparati ve example 5 | × | Δ | Δ |
| Comparati ve example 6 | ○ | Δ | Δ |
| Comparati ve example 7 | ○ | Δ | Δ |
| Comparati ve example 8 | ○ | Δ | Δ |
| Comparati ve example 9 | ○ | Δ | Δ |
| Comparati ve example 10 | × | Δ | Δ |
| Comparati ve example 11 | × | Δ | Δ |
| Comparati ve example 12 | ○ | × | × |
| Comparati ve example 13 | ○ | × | × |
| Comparati ve example 14 | ○ | × | × |
| Comparati ve example 15 | ○ | × | × |
| Comparati ve example 16 | ○ | × | × |
| Comparati ve example 17 | ○ | × | × |

As indicated in the experimental results in Table 4 above, in inventive examples 1 to 9 satisfying the plating composition and manufacturing conditions specified in the present disclosure, corrosion resistance, image clarity after painting and appearance properties were excellent.

In particular, among the inventive examples, in inventive examples 7 to 9 satisfying the cooling rates of relational expressions 3 and 4 specified in the present disclosure, surface appearance was more excellent than that of inventive examples 1 to 6. This may be because an appropriate ratio of (110) plane crystal of the $MgZn_2$ phase and (103) plane crystal of the $MgZn_2$ phase were formed around the (002) plane crystal of the Zn phase, and also the presence ratio of (103) plane crystals in the $MgZn_2$ phase, which greatly contributes to the presence or absence of spangle, was improved.

In comparative examples 1 to 17, not satisfying the entirety of the plating compositions and manufacturing conditions specified in the present disclosure, one or more of corrosion resistance, image clarity after painting and appearance properties was deteriorated as compared to inventive examples 1 to 9.

**Claims**

1.  A plated steel sheet, comprising:

    a base steel sheet; and
    a Zn-Mg-Al-based plating layer provided on at least one side of the base steel sheet,
    wherein the plating layer comprises, by weight%, Mg: 4.0 to 6.3%, Al: 11.0 to 19.5%, a balance of Zn and inevitable impurities, and satisfies relational expression 1 as below:

    [Relational expression 1]

    $$0.1 \leq I_{(110)}/I_{(103)} \leq 0.25$$

    In the Relational expression 1, $I_{(110)}$ is X-ray diffraction integrated intensity of a (110) plane crystal peak of a $MgZn_2$ phase, and $I_{(103)}$ is X-ray diffraction integrated intensity of a (103) plane crystal peak of a $MgZn_2$ phase.

2.  The plated steel sheet of claim 1, further comprising:
    a Fe-Al based inhibition layer provided between the base steel sheet and the Zn-Mg-Al based plating layer.

3. The plated steel sheet of claim 2, wherein an average thickness of the Fe-Al-based inhibition layer is 0.1 to 1.0 $\mu$m.

4. The plated steel sheet of claim 1, wherein a value of $I_{(110)}$ satisfies 80 or less.

5. The plated steel sheet of claim 1, wherein a value of $I_{(103)}$ satisfies 530 or more.

6. A method for manufacturing a plated steel sheet, the method comprising:

hot-dip galvanizing a base steel sheet by immersing the base steel sheet in a plating bath comprising, by weight%, Mg: 4.0 to 6.3%, Al: 11.0 to 19.5%, and a balance of Zn and inevitable impurities at an immersing temperature of $T_B$-10°C to $T_B$-40°C based on a plating bath temperature ($T_B$);
performing air-wiping by supplying inert gas cooled to 1 to 20°C to the hot-dip galvanized steel sheet;
primary cooling the air-wiped steel sheet to 420°C at an average cooling rate of 10 to 15°C/s; and
secondary cooling the primarily cooled steel sheet at an average cooling rate of 5 to 8°C/s in a temperature range of less than 420°C and 300°C or more,
wherein relational expression 2 is satisfied:

[Relational expression 2]

$$W_{air} \times (1-T/T_o) + 5 \leq P_{air}$$

In the Relational expression 2, $W_{air}$ is a spacing between air-knives, and a unit is mm, $P_{air}$ is pressure of the air-knife, and a unit thereof is kPa, T is a temperature of the supplied inert gas, and a unit thereof is °C, and $T_o$ is an average temperature of atmosphere and is determined as 25°C.

7. The method of claim 6, wherein relational expressions 3 and 4 are satisfied:

[Relational expression 3]

$$17 \leq C_1 + C_2$$

[Relational expression 4]

$$5 \leq C_1 - C_2 \leq 10$$

In the Relational expression 3, $C_1$ is an average cooling rate [°C/s] during the primary cooling, and $C_2$ is an average cooling rate [°C/s] during the secondary cooling.

8. The method of claim 6, wherein surface roughness of the plated steel sheet obtained by the secondary cooling is controlled within a range of Ra: 0.3 to 0.6 um and Rpc: 40 to 90 (/10 mm).

[FIG. 1]

## INTERNATIONAL SEARCH REPORT

| International application No. |
| --- |
| **PCT/KR2022/014541** |

| A. | CLASSIFICATION OF SUBJECT MATTER |
| --- | --- |

**C23C 2/06**(2006.01)i; **C23C 2/20**(2006.01)i; **C23C 2/26**(2006.01)i; **C23C 18/04**(2006.01)i

According to International Patent Classification (IPC) or to both national classification and IPC

| B. | FIELDS SEARCHED |
| --- | --- |

Minimum documentation searched (classification system followed by classification symbols)

C23C 2/06(2006.01); C22C 18/00(2006.01); C22C 18/04(2006.01); C23C 2/04(2006.01); C23C 2/26(2006.01); C23C 2/28(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 도금강판(plated steel sheet), 용융아연도금(hot dip galvanized), 회절(diffraction), 에어와이핑(air wiping), 냉각(cooling), 내식성(corrosion resistance)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | KR 10-2021-0035722 A (POSCO et al.) 01 April 2021 (2021-04-01)<br>See claims 1 and 9. | 1-8 |
| A | KR 10-2017-0076924 A (POSCO) 05 July 2017 (2017-07-05)<br>See paragraph [0039] and claims 1, 14 and 16. | 1-8 |
| A | JP 2021-004403 A (NIPPON STEEL CORP.) 14 January 2021 (2021-01-14)<br>See paragraphs [0100]-[0104] and claims 1 and 5. | 1-8 |
| A | JP 2004-360056 A (NISSHIN STEEL CO., LTD.) 24 December 2004 (2004-12-24)<br>See paragraph [0044] and claim 4. | 1-8 |
| A | KR 10-1376381 B1 (DONGBU STEEL CO., LTD.) 20 March 2014 (2014-03-20)<br>See claims 1 and 5. | 1-8 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **12 December 2022** | **12 December 2022** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

| International application No. |
| --- |
| **PCT/KR2022/014541** |

| Patent document cited in search report | | | Publication date (day/month/year) | Patent family member(s) | | | Publication date (day/month/year) |
| --- | --- | --- | --- | --- | --- | --- | --- |
| KR | 10-2021-0035722 | A | 01 April 2021 | CN | 114466948 | A | 10 May 2022 |
|  |  |  |  | EP | 4036270 | A1 | 03 August 2022 |
|  |  |  |  | US | 2022-0341017 | A1 | 27 October 2022 |
|  |  |  |  | WO | 2021-060879 | A1 | 01 April 2021 |
| KR | 10-2017-0076924 | A | 05 July 2017 | CN | 108474093 | A | 31 August 2018 |
|  |  |  |  | CN | 108474093 | B | 30 October 2020 |
|  |  |  |  | EP | 3396004 | A1 | 31 October 2018 |
|  |  |  |  | EP | 3396004 | B1 | 21 July 2021 |
|  |  |  |  | ES | 2893003 | T3 | 07 February 2022 |
|  |  |  |  | JP | 2019-501296 | A | 17 January 2019 |
|  |  |  |  | JP | 6830489 | B2 | 17 February 2021 |
|  |  |  |  | US | 10907243 | B2 | 02 February 2021 |
|  |  |  |  | US | 2019-0010595 | A1 | 10 January 2019 |
|  |  |  |  | WO | 2017-111400 | A1 | 29 June 2017 |
| JP | 2021-004403 | A | 14 January 2021 | None | | | |
| JP | 2004-360056 | A | 24 December 2004 | None | | | |
| KR | 10-1376381 | B1 | 20 March 2014 | None | | | |